(19) Europäisches Patentamt
European Patent Office
Office européen des brevets

(11) **EP 1 215 557 B1**

(12) **FASCICULE DE BREVET EUROPEEN**

(45) Date de publication et mention
de la délivrance du brevet:
**02.12.2009 Bulletin 2009/49**

(51) Int Cl.:
***G06F 1/02*** (2006.01)

(21) Numéro de dépôt: **00204544.1**

(22) Date de dépôt: **15.12.2000**

(54) **Oscillateur à commande numérique notamment pour un récepteur de signaux radiofréquences**

Digital gesteuerter Oszillator, insbesondere für Radiofrequenz-Signalempfänger

Digitally controlled oscillator, notably for a radio frequency signal receiver

(84) Etats contractants désignés:
**AT BE CH CY DE DK ES FI FR GB GR IE IT LI LU MC NL PT SE TR**

(43) Date de publication de la demande:
**19.06.2002 Bulletin 2002/25**

(73) Titulaire: **ASULAB S.A.**
**2074 Marin (CH)**

(72) Inventeurs:
• **Farine, Pierre-André**
**2000 Neuchâtel (CH)**
• **Etienne, Jean-Daniel**
**2206 Les Geneveys-sur-Coffrane (CH)**
• **Riem-Vis, Ruud**
**2000 Neuchâtel (CH)**
• **Firouzi, Elham**
**2514 Ligerz (CH)**

(74) Mandataire: **Ravenel, Thierry Gérard Louis et al**
**I C B**
**Ingénieurs Conseils en Brevets SA,**
**7, rue des Sors**
**2074 Marin (CH)**

(56) Documents cités:
**EP-A- 0 414 445    US-A- 5 371 765**
**US-A- 5 646 967**

**Description**

L'invention concerne un oscillateur à commande numérique notamment pour un récepteur de signaux radiofréquences, tel qu'un récepteur du type GPS. Un tel oscillateur est destiné à recevoir à l'entrée un signal d'horloge à une première fréquence cadençant les opérations de l'oscillateur, ainsi qu'un mot binaire défini par plusieurs bits, et à fournir en sortie au moins un signal à fréquence déterminée sur la base dudit mot binaire et du signal d'horloge.

Le signal de sortie à fréquence déterminée est un signal qui est en principe une succession d'impulsions rectangulaires de tension dont la largeur et l'espace entre deux impulsions ne sont pas forcément uniformes sur une période de temps donnée. Il est à noter que ce signal de sortie peut être considéré comme une succession de bits en série prenant les valeurs 1 ou 0 à chaque coup d'horloge en fonction du mot binaire imposé en entrée de l'oscillateur. Bien entendu, ledit oscillateur peut fournir en sortie plus d'un signal de sortie défini chacun par une succession différente de bits en série.

Ces oscillateurs à commande numérique sont utiles entre autre dans des domaines d'applications où l'environnement est bruyant. Dans un environnement bruyant, les signaux utiles doivent être tirés des signaux radiofréquences fortement bruités en gardant une fine résolution en fréquence des oscillateurs. Ces domaines d'applications sont par exemple la téléphonie cellulaire ou principalement les récepteurs de signaux radiofréquences, tels que les récepteurs GPS.

Dans le cas de récepteurs de signaux radiofréquences, il est généralement opéré une démodulation des signaux reçus pour retirer le message desdits signaux radiofréquences. Des oscillateurs à commande numérique sont placés habituellement dans des boucles de démodulation des étages de corrélation de tels récepteurs. Ces oscillateurs permettent de fournir des signaux à fréquence déterminée ou corrigée par exemple pour la génération d'une réplique de la fréquence porteuse des signaux radiofréquences reçus. Cette réplique de fréquence est ensuite multipliée dans l'étage de corrélation aux signaux mis en forme dans lesdits récepteurs afin de pouvoir tirer les signaux utiles.

Dans le cas plus précisément de récepteurs de type GPS, un premier oscillateur à commande numérique est placé dans la boucle pour la génération de la réplique de la fréquence porteuse du signal reçu. Un second oscillateur à commande numérique est quant à lui placé dans la boucle pour la génération de la réplique du code pseudo-aléatoire PRN caractéristique du satellite à poursuivre.

Ces récepteurs radiofréquences de type GPS comprennent notamment une antenne de réception de signaux radiofréquences provenant de satellites, un étage de réception et de mise en forme de signaux radiofréquences fournis par l'antenne, et un étage de corrélation recevant des signaux intermédiaires mis en forme par l'étage de réception. L'étage de corrélation est composé de plusieurs canaux qui comprennent chacun un corrélateur. Chaque corrélateur comprend donc les deux oscillateurs à commande numérique décrits ci-dessus.

Lesdits récepteurs comprennent encore un microprocesseur relié à l'étage de corrélation et destiné à calculer des données de position en X, Y et Z, de vitesse et temporelles en fonction des données tirées, après corrélation, des signaux GPS émis par les satellites. Les données tirées des signaux GPS sont notamment le message GPS et les pseudo-distances. Il faut normalement quatre satellites visibles pour déterminer sa position, sa vitesse et l'heure locale par exemple.

Il faut savoir que les satellites, qui sont actuellement au nombre de 24 en orbite autour de la Terre, émettent des signaux radiofréquences portant des messages de données d'éphémérides et d'almanachs utiles notamment pour le calcul de la position. Ces signaux radiofréquences sont composés d'une première fréquence porteuse L1 à 1,57542 GHz sur laquelle sont modulés le P-code à 10,23 MHz et le C/A code PRN à 1,023 MHz propre à chaque satellite avec le message GPS à 50 Hz. Lesdits satellites émettent en plus une seconde fréquence porteuse L2 à 1,2276 GHz sur laquelle sont modulés le P-code à 10,23 MHz avec le message GPS à 50 Hz. Dans des applications civiles, uniquement la fréquence porteuse L1 avec le C/A code est utilisée par les récepteurs terrestres pour le calcul selon le message GPS de la position en X, Y et Z, de la vitesse et du temps.

Le C/A code PRN (pseudo random noise) de chaque satellite, qui est appelé également le code de Gold, est un code pseudo-aléatoire unique pour chaque satellite de manière à pouvoir différencier les signaux émis par les satellites à l'intérieur du récepteur.

Ce code pseudo-aléatoire PRN est un signal numérique qui est composé de 1023 chips et qui se répète toutes les millisecondes. Cette période de répétition est définie également par le terme époque (epoch en terminologie anglaise) du code de Gold. Il est à noter qu'un chip prend des valeurs 1 ou 0 comme pour un bit. Toutefois, un chip (terme utilisé dans la technique GPS) est à différencier d'un bit qui est utilisé pour définir une unité d'information.

Les codes de Gold sont définis pour 32 numéros d'identification de satellites ce qui laisse encore libre choix du code spécifique attribué pour chaque autre satellite qui sera mis en orbite sur un des plans orbitaux. Les récepteurs GPS comprennent généralement les données de ces codes dans une mémoire, ainsi que la position estimée de chaque satellite correspondant en orbite. De ce fait, des mots binaires relatifs à la fréquence du code d'un satellite et à la fréquence porteuse estimée peuvent être fournis aux oscillateurs utilisés dans les boucles de démodulation pour permettre de se verrouiller plus rapidement sur des satellites visibles.

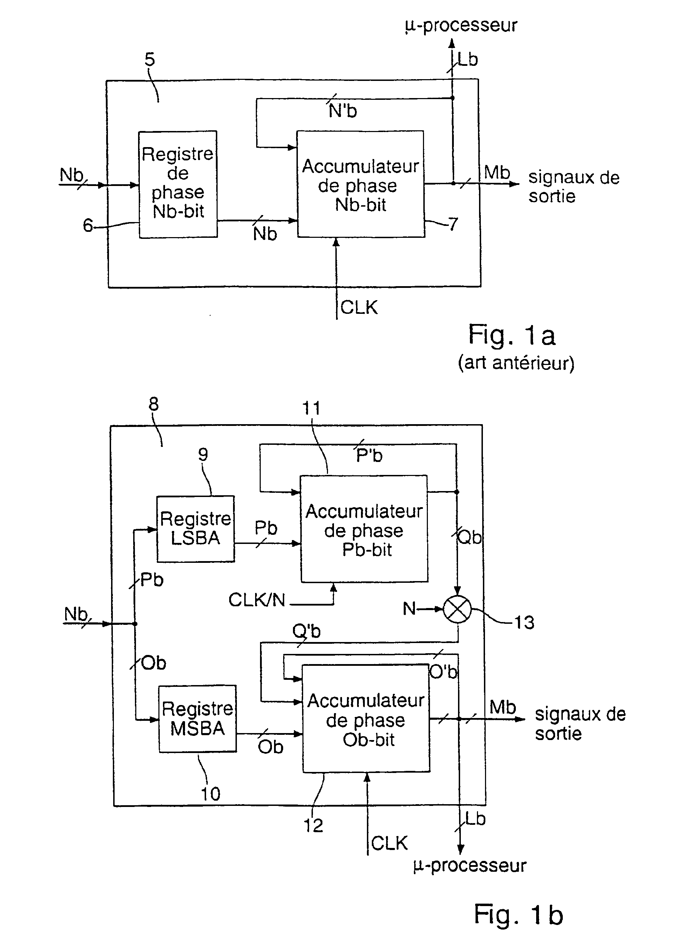

A titre d'exemple la figure 1a montre schématiquement un tel oscillateur à commande numérique qui est communément utilisé dans des récepteurs de signaux radiofréquences. L'oscillateur 5 reçoit à l'entrée un mot binaire de phase à Nb bits en parallèle qui est placé dans un registre Nb-bit de phase 6. Dans des boucles de démodulation, ce sont principalement des mots binaires des écarts de phase qui sont introduits dans l'oscillateur à commande numérique. Le registre 6 fournit le nombre Nb de bits mémorisés à un accumulateur de phase 7 qui est cadencé par un signal d'horloge CLK. Des lignes de sortie N'b de l'accumulateur 7 sont reliées à des entrées dudit accumulateur afin que des bits ou signaux binaires de sortie en parallèle sur lesdites lignes soient additionnées au nombre Nb de bits à chaque coup d'horloge. Normalement le nombre N'b de bits de sortie est égal au nombre Nb de bits du mot binaire. Lb bits en sortie de l'accumulateur sont dirigés vers le microprocesseur pour notamment opérer un calcul en temps réel de la phase. Un nombre Mb de signaux binaires sont fournis comme signaux de sortie à fréquence déterminée de l'oscillateur. Le nombre Mb de bits de sortie n'a pas besoin d'être égal à la totalité des Nb bits introduits dans l'oscillateur. Dans la majorité des cas, seulement certains bits de poids fort en sortie sont utilisés pour définir les signaux de sortie.

Dans la plupart des applications de récepteurs radiofréquences, tels que les récepteurs GPS, la réduction en consommation est devenue une nécessité. Cette réduction en consommation est notamment essentielle au cas où de tels récepteurs sont incorporés dans des objets de petites dimensions qui comprennent une alimentation par batterie ou accumulateur. De tels objets sont par exemple une montre ou un téléphone portable.

Cette consommation des récepteurs ne doit donc pas être trop importante dans ces petits objets afin d'éviter un changement trop fréquent de la batterie de l'objet ou de devoir exécuter une recharge systématique à brève échéance d'un accumulateur d'énergie. Il est à noter que plus la batterie est petite en fonction de l'objet portable dans lequel le récepteur est monté, et plus il est nécessaire de concevoir les blocs électroniques des circuits intégrés du récepteur GPS en taille réduite. De plus, il doit être tenu compte de la manière dont les signaux sont traités dans lesdits circuits pour tirer le message GPS et les pseudo-distances de chaque satellite capté.

L'oscillateur à commande numérique standard, décrit ci-dessus en référence à la figure 1a, constitue une partie importante de la consommation de tout l'étage de corrélation d'un récepteur de signaux radiofréquences, tel qu'un récepteur GPS. Cet oscillateur doit être suffisamment large pour avoir une petite résolution de fréquences. La fréquence d'horloge CLK est souvent supérieure à quelques mégahertz en fonction des signaux échantillonnés et quantifiés à traiter, ce qui fait que tous les composants de l'oscillateur fonctionnent à une fréquence très élevée. Cela génère donc une forte consommation ce qui est un inconvénient majeur de tels oscillateurs standards.

Le document JP 8-338865 décrit un récepteur GPS. Un oscillateur à commande numérique du type décrit ci-dessus est monté dans ce récepteur dans le but de réduire le nombre des composants dans la boucle de génération de la réplique de la fréquence porteuse. Pour cela, il est proposé d'ajouter un bit de poids fort à plusieurs bits de poids faible dans un additionneur. Les bits les plus significatifs sont ensuite maintenus dans un registre afin d'être placés à l'entrée de l'additionneur pour une opération d'addition subséquente. Dans cette réalisation, une table de recherche en sortie de l'oscillateur n'est plus nécessaire pour générer les signaux en quadrature de la réplique de la fréquence porteuse. Les signaux en quadrature sont fournis par deux signaux de sortie de l'oscillateur à travers une porte logique EX-NOR et par un des deux signaux de sortie à travers un inverseur. Les deux signaux de sortie utilisés de l'oscillateur sont les deux bits de poids fort des signaux de sortie. Malgré la réduction du nombre des composants en sortie de l'oscillateur de la boucle, aucune réduction importante en consommation n'est réalisée pour l'oscillateur proprement dit. Cet oscillateur dans sa totalité fonctionne donc toujours à une fréquence d'horloge très élevée ce qui est un inconvénient.

On peut citer également le document de brevet EP 0 414 445, qui décrit un synthétiseur de fréquence capable de fournir un signal de sortie à fréquence prédéterminée sur la base d'un mot binaire de fréquence reçu. Le synthétiseur de fréquence comprend notamment un accumulateur de phase à m bits pour recevoir le mot binaire et fournir un signal binaire à c bits. L'accumulateur est composé d'un accumulateur de composantes de phase grossières du mot binaire de fréquence reçu et d'un accumulateur de composantes de phase fines du mot binaire reçu. L'accumulateur de composantes fines incrémente l'accumulateur de composantes grossières qui fournit le signal binaire à c bits en réponse à des composantes de phase fines accumulées, qui excèdent une valeur prédéterminée. L'accumulateur de phase est entièrement cadencé par un signal d'horloge à haute fréquence, ce qui constitue un inconvénient.

Dans le document de brevet US 5,371,765, il est décrit un circuit accumulateur de phase binaire pour un synthétiseur de fréquence. Ce circuit accumulateur de phase comprend deux accumulateurs de phase, qui sont cadencés par un même signal d'horloge pour les opérations d'addition. Un premier accumulateur de phase reçoit p bits de poids fort d'un mot binaire d'incrément de phase, alors qu'un second accumulateur de phase reçoit q bits de poids faible du mot binaire à p+q bits. Un signal de retenue est transmis de l'additionneur du second accumulateur à l'additionneur du premier accumulateur. Aucune réduction de consommation n'est prévue pour le circuit accumulateur, ce qui constitue un inconvénient.

Dans le document de brevet US 5,646,967, il est décrit un synthétiseur d'onde triangulaire multiphase. Ce synthétiseur comprend un premier compteur pour fournir en sortie des bits de poids fort, et un second compteur pour fournir en sortie des bits de poids faibles et deux signaux de retenue à l'entrée du premier compteur. Les bits de poids faible sont entrés dans un additionneur pour opérer une addition avec une précédente valeur d'un registre de sortie en étant cadencé par un signal d'horloge. Un signal de sortie de retenue du registre de sortie est entré dans un modulateur avec les bits de poids forts, qui est cadencé par le même signal d'horloge. Aucune réduction de consommation n'est prévue pour ce synthétiseur, ce qui constitue un inconvénient.

Un but que se propose de résoudre l'objet de l'invention consiste à réaliser un oscillateur à commande numérique notamment pour un récepteur de signaux radiofréquences susceptible de réduire au maximum la consommation d'énergie en palliant les inconvénients des oscillateurs de l'art antérieur. La petite résolution en fréquence est maintenue égale aux oscillateurs de l'art antérieur, mais, par contre, la consommation est fortement réduite.

Ce but, ainsi que d'autres sont atteints par l'oscillateur à commande numérique notamment pour un récepteur de signaux radiofréquences cité ci-devant qui comprend les caractéristiques définies dans la revendication indépendante 1.

Des formes particulières d'exécution de l'oscillateur à commande numérique sont définies dans les revendications dépendantes 2 à 7.

Un avantage de l'oscillateur à commande numérique multiphase consiste à réduire la consommation en énergie en ne faisant travailler par exemple que la moitié de l'oscillateur pendant N cycles d'un signal d'horloge à une première fréquence. La résolution de cet oscillateur multiphase n'est pas diminuée par rapport à un oscillateur à commande numérique standard. Cette première fréquence d'horloge est de l'ordre de quelques mégahertz. De ce fait si une moitié ou plus de l'oscillateur reste en attente pendant N coups d'horloge à la première fréquence, cela permet de réduire fortement la consommation de cet oscillateur.

Cet oscillateur multiphase est utile surtout dans un environnement bruyant comme dans le cas de signaux radiofréquences de type GPS.

Un certain nombre de bits de poids fort du mot binaire est introduit dans l'étage d'accumulation des bits de poids fort qui travaille à la première fréquence d'horloge. Cette partie est la plus importante de l'oscillateur pour pouvoir conserver la même résolution en fréquence par rapport à un oscillateur traditionnel. Les bits de poids faible du mot binaire sont quant à eux introduits dans l'étage des bits de poids faible qui travaille à une seconde fréquence N fois inférieure à la première fréquence. L'influence des bits de poids faible n'a qu'une influence à long terme. Par conséquent, les bits ou signaux binaires de sortie de cet étage d'accumulation multipliés par N ne sont introduits dans l'étage d'accumulation des bits de poids fort qu'après N cycles de la première fréquence d'horloge.

N est de préférence une puissance de 2, c'est-à-dire que N est choisi pour valoir de préférence $2^m$ où m est un nombre entier plus grand que 0 pour définir un nombre binaire. La valeur de N peut être fixée par exemple à 16, ce qui fait que la seconde fréquence d'horloge est 16 fois inférieure à la première fréquence. La consommation de l'oscillateur multiphase peut être évaluée comme étant approximativement la moitié d'un oscillateur traditionnel si les nombres de bits de poids fort et faible sont répartis uniformément dans chaque étage d'accumulation.

Les fréquences d'horloge utilisées dans le récepteur sont adaptées en fonction des fréquences des signaux radiofréquences reçus afin de cadencer plusieurs parties de manière identique. Cela a pour conséquence de réduire également le nombre d'éléments électroniques notamment dans l'étage de corrélation et par voie de conséquence la consommation du récepteur. De plus, une diminution de consommation est accomplie en pratiquant une conversion ou compression de fréquence des signaux radiofréquences à destination de l'étage de corrélation.

Les buts, avantages et caractéristiques de l'oscillateur à commande numérique multiphase apparaîtront mieux dans la description suivante de formes d'exécution illustrées par les dessins sur lesquels :

-    la figure 1a déjà citée représente schématiquement un oscillateur à commande numérique de l'art antérieur,
-    la figure 1b représente schématiquement un oscillateur à commande numérique du type multiphase selon l'invention,
-    la figure 2 représente de manière plus détaillée une forme d'exécution de l'oscillateur à commande numérique du type multiphase selon l'invention, et
-    la figure 3 représente schématiquement un récepteur GPS qui comprend un étage de corrélation d'un canal ayant deux oscillateurs à commande numérique multiphase selon l'invention.

Dans la description suivante, l'oscillateur à commande numérique multiphase ne sera expliqué qu'en relation à une utilisation dans un récepteur de signaux radiofréquences basse puissance, par exemple un récepteur du type GPS. Ce récepteur est placé dans un dispositif qui comprend une batterie ou un accumulateur pour l'alimentation électrique des composants du récepteur. Cependant, l'utilisation d'un tel oscillateur multiphase peut également se justifier dans tout autre dispositif qui serait placé dans un environnement bruyant, par exemple pour de la téléphonie cellulaire.

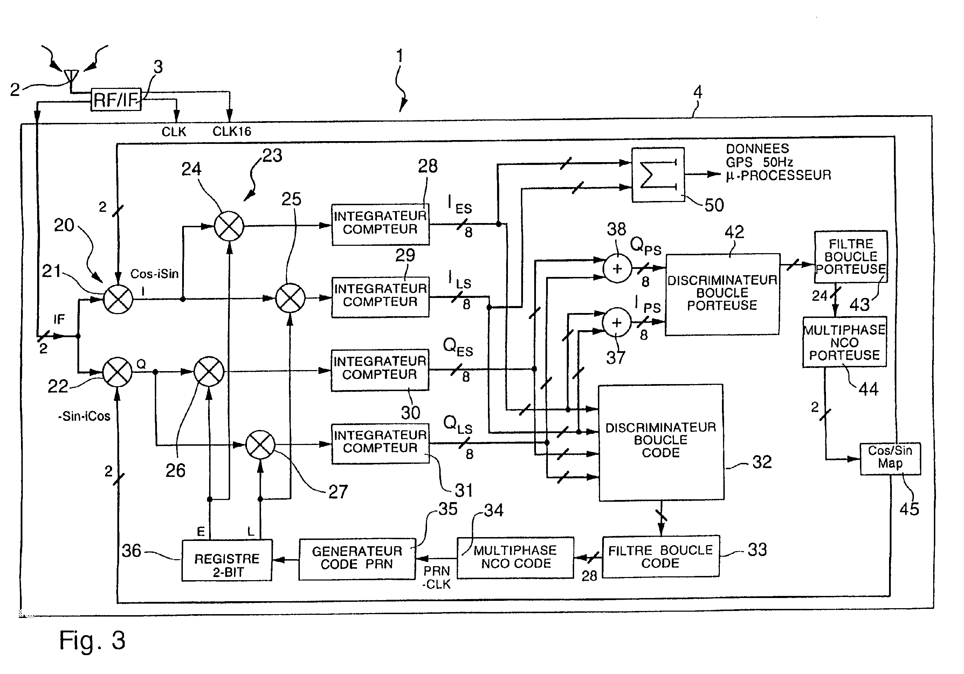

Comme il sera décrit en référence à la figure 3, deux oscillateurs à commande numérique multiphase sont placés dans deux boucles de l'étage de corrélation d'un récepteur GPS. Une boucle concerne la génération de la réplique de la fréquence porteuse des signaux radiofréquences reçus par le récepteur. Une autre boucle concerne la génération d'un code pseudo-aléatoire PRN représentatif d'un satellite à poursuivre. Ces oscillateurs ont pour but de fournir en sortie un signal à fréquence déterminé. Ladite fréquence dépend d'un mot binaire placé à l'entrée de l'oscillateur, ainsi que de signaux d'horloge pour les opérations des oscillateurs.

La figure 1b montre les principaux blocs électroniques d'un oscillateur à commande numérique multiphase 8 qui fonctionne dans une architecture à bits parallèles. Cet oscillateur 8 comprend pour l'essentiel un premier étage d'accumulation pour un nombre Ob de bits de poids fort du mot binaire à Nb bits reçus en entrée et un second étage d'accumulation pour un nombre Pb de bits de poids faible dudit mot binaire.

Le second étage d'accumulation est composé d'un registre de phase 9, dénommé registre LSBA (Least Significant Bit Accumulator en anglais), pour les Pb bits de poids faible du mot binaire, suivi d'un accumulateur de phase 11 fournissant un certain nombre de signaux de sortie ou bits de sortie. Les Pb bits stockés dans le registre 9 sont placés à l'entrée de l'accumulateur 11 pour être additionnés à chaque coup d'horloge à la seconde fréquence CLK/N à P'b bits de sortie précédents de l'accumulateur 11. Normalement, les P'b bits de sortie sont en nombre égal aux Pb bits provenant du registre 9. A chaque coup d'horloge à la seconde fréquence imposé à l'accumulateur, un cumul d'addition est donc opéré en sortie de l'accumulateur 11. La conception d'un tel accumulateur est bien connu d'un homme du métier dans ce domaine technique.

Un certain nombre de bits ou signaux binaires de sortie Qb de l'accumulateur de phase 11 est multiplié par N dans un multiplicateur ou multiplexeur 13. Cette multiplication correspond pour un nombre binaire ($2^n$) à un décalage de N positions des bits de sortie vers des bits de poids fort. Le nombre Q'b de bits multiplié est introduit à l'entrée du premier étage d'accumulation pour une addition avec les Ob bits de poids fort. Ce nombre Q'b de bits ne change de valeur qu'après N cycles du signal d'horloge à la première fréquence CLK. Dans le cas présent, le nombre Q'b de bits est égal au nombre Qb de bits.

Le premier étage d'accumulation est composé comme pour le second étage d'un registre de phase 10, dénommé registre MSBA (Most Significant Bit Accumulator en anglais), pour les Ob bits de poids fort du mot binaire. Le registre 10 est suivi d'un accumulateur de phase 12 fournissant un certain nombre de bits ou signaux binaires de sortie dont le ou les signaux de sortie Mb à fréquence déterminée. Le ou les signaux de sortie Mb sont sélectionnés parmi les bits les plus forts à la sortie de l'accumulateur 12. Les Ob bits stockés dans le registre 10 sont placés à l'entrée de l'accumulateur 12 tout comme les Q'b bits provenant du second étage d'accumulation. Une addition des Ob bits et Q'b bits est opérée à chaque coup d'horloge à la première fréquence CLK à O'b bits de sortie précédents de l'accumulateur 12. Normalement, les O'b bits de sortie sont en nombre égal aux Ob bits provenant du registre 10. Comme pour le second étage d'accumulation, un cumul d'addition est opéré en sortie de l'accumulateur 12 à chaque coup d'horloge à la première fréquence CLK.

Quelques bits Lb de sortie de l'accumulateur 12 sont dirigés vers un microprocesseur du récepteur pour opérer par exemple un calcul en temps réel de la phase ou de la pseudo-distance.

Le premier étage d'accumulation est cadencé par un signal d'horloge à une première fréquence CLK qui peut valoir par exemple 4,36 MHz pour l'application dans un récepteur GPS basse puissance. Le second étage d'accumulation est quant à lui cadencé par un signal d'horloge à une seconde fréquence CLK/N qui est N fois inférieure à la première fréquence d'horloge CLK.

La valeur N est définie comme un multiple de 2. Cette valeur N est choisie pour être de préférence $2^m$, où m est un nombre entier plus grand que 0 pour définir une position d'un nombre binaire. Pour cet oscillateur, la seconde fréquence d'horloge est fixée par exemple 16 fois inférieure à la première fréquence d'horloge. Elle peut valoir donc 272,5 kHz dans le cas présent.

Tous les 16 coups d'horloge à la première fréquence d'horloge CLK, un report différent des bits de sortie du second étage d'accumulation est appliqué à l'entrée du premier étage d'accumulation des bits de poids fort afin d'apporter une correction finale sur le ou les signaux de sortie du premier étage. Comme le changement de ce report d'addition ne se fait pas à chaque coup d'horloge du premier étage, une forte économie d'énergie est réalisée.

Pour un récepteur GPS basse puissance, un oscillateur à commande numérique multiphase est placé dans la boucle de génération de la réplique de la fréquence porteuse. Le mot binaire fourni à l'entrée dudit oscillateur NCO de la porteuse est fixé par exemple à 24 bits qui se répartissent par exemple en 12 bits Ob de poids fort et 12 bits Pb de poids faible. Les 12 bits Ob occupent les positions [23:12] du mot binaire, tandis que les 12 bits Pb occupent les positions [11:0] dudit mot binaire. En référence à la figure 1b, en principe seulement 6 bits Qb ou Q'b de poids les plus forts des P'b bits de sortie de l'accumulateur 11 sont utilisés pour le premier étage d'accumulation.

Comme il s'agit de corriger la fréquence de la réplique de la porteuse en tenant compte des écarts de fréquence dus notamment à l'effet Doppler, il est introduit un mot binaire dans l'oscillateur qui correspond à une phase ou à un écart de phase de correction de la réplique de la porteuse. La résolution en fréquence $\Delta f_{min}$ avec un tel oscillateur NCO multiphase à 24 bits est défini par la formule ci-dessous :

$$\Delta f_{min} = f_{CLK} 2^{-Nb}$$

La fréquence d'horloge $f_{CLK}$ étant de 4,36 MHz dans le cas présent, cela donne une résolution de fréquences qui équivaut à 260 mHz.

Un autre oscillateur numérique multiphase est placé dans la boucle de génération du code pseudo-aléatoire PRN. Le mot binaire fourni à l'entrée dudit oscillateur NCO du code est fixé par exemple à 28 bits qui se répartissent par exemple en 14 bits Ob de poids fort et 14 bits Pb de poids faible. Les 14 bits Ob occupent les positions [27:14] du mot binaire, tandis que les 14 bits Pb occupent les positions [13:0] dudit mot binaire. En référence à la figure 1b, en principe seulement 6 bits Qb ou Q'b de poids les plus forts des P'b bits de sortie de l'accumulateur 11 sont utilisés pour le premier étage d'accumulation.

Comme il s'agit de fournir un signal de sortie qui correspond au signal d'horloge pour un générateur de code pseudo-aléatoire, il est introduit un mot binaire dans l'oscillateur NCO multiphase de code qui correspond à une phase ou à un écart de phase pour générer la réplique du code PRN. Il doit être tenu compte de la phase des signaux radiofréquences, ainsi que d'un écart de la fréquence porteuse pour le mot binaire de l'oscillateur NCO de code. La résolution en fréquence $\Delta f_{min}$ avec un tel oscillateur NCO mutliphase à 28 bits est de l'ordre de 16 mHz.

Que ce soit pour l'oscillateur multiphase NCO de la porteuse ou pour l'oscillateur multiphase NCO du code, comme il y a une répartition uniforme entre les bits de poids fort et les bits de poids faible, la consommation en énergie en première approximation est la moitié de celle d'un oscillateur standard. Bien entendu pour réduire encore plus la consommation en énergie, le nombre de bits de poids fort pourrait encore être réduit au profit du nombre de bits de poids faible. Toutefois, l'erreur en phase peut dans ce cas légèrement augmenter. De plus, le nombre de bits pour lesdits oscillateurs pourrait être différent des 24 et 28 bits définis précédemment.

Le mot binaire fournit à l'entrée de l'oscillateur par un discriminateur précédent de la boucle de démodulation se modifie après un certain nombre de cycles d'intégration où chaque cycle est de durée d'une milliseconde (époque). Dans le cas présent, il a été choisi que ce mot binaire fourni à l'oscillateur soit modifié après 16 cycles, c'est-à-dire après 16 ms.

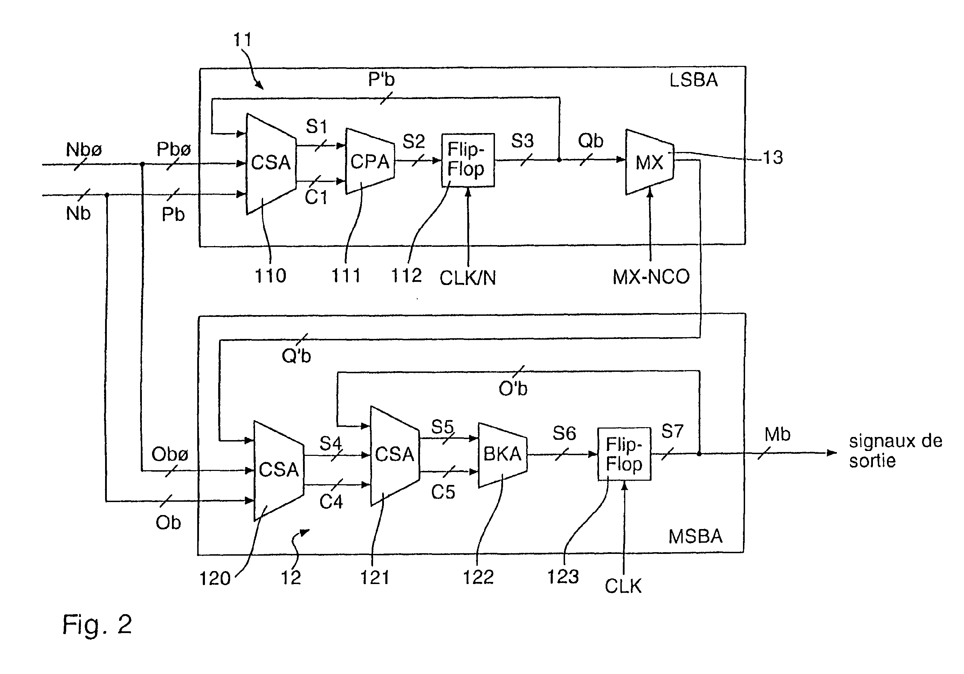

A la figure 2, une forme d'exécution de l'oscillateur à commande numérique multiphase (NCO) est représentée de manière plus détaillée. Il est à noter que par simplification les registres d'entrée pour deux mots binaires ne sont pas représentés pour ne pas surcharger la figure 2. Cet oscillateur peut être utilisé aussi bien dans la boucle de la réplique de la fréquence porteuse que dans celle de la génération du code pseudo-aléatoire.

Deux mots binaires, référencés par Nb et Nbø, sont introduits à l'entrée de l'oscillateur. Le premier mot binaire à Nb bits concerne un écart de phase ou un incrément de phase ou de fréquence qui est généré dans la boucle de la porteuse ou du code après l'opération de corrélation et d'intégration. Le second mot binaire à Nbø bits reste fixe tout au long des opérations de démodulation. Ce second mot binaire concerne une valeur relative au code ou à la fréquence porteuse tirée d'une mémoire du récepteur. De plus, ce second mot binaire est nécessaire pour permettre de se verrouiller plus rapidement sur le satellite visible cherché, car les signaux radiofréquences reçus sont fortement bruités.

Il est à noter que les codes pseudo-aléatoires ainsi que les fréquences porteuses des signaux radiofréquences sont bien connus. Plusieurs données relatives aux satellites en orbite sont mémorisées dans une mémoire reliée au microprocesseur du récepteur. Ces informations concernent la position desdits satellites, leur code de Gold, et ceux qui sont susceptibles d'être visibles par le récepteur GPS terrestre au moment de sa mise en fonction. Ledit microprocesseur peut donc calculer la position en orbite d'un satellite à poursuivre afin de connaître la fréquence porteuse corrigée en fonction des écarts dus notamment à l'effet Doppler, ainsi que de prévoir la phase du code dudit satellite. Ce second mot binaire est additionné au premier mot binaire de la boucle dans l'oscillateur pour permettre de retirer le signal utile des signaux bruités dans les boucles de démodulation.

Le nombre de bits du premier mot binaire est égal au nombre de bits du second mot binaire. Un même nombre de bits Ob et Obø de poids fort des premier et second mots binaires est introduit dans le premier étage d'accumulation 12 des bits de poids fort. Un même nombre de bits Pb et Pbø de poids faible des premier et second mots binaires est introduit dans le second étage d'accumulation 11.

Ce second étage d'accumulation 11 comprend tout d'abord un additionneur à sauvegarde de retenues 110 (CSA ou Carry Save Adder en anglais) qui reçoit en entrée les Pb et Pbø bits de poids faible des premier et second mots binaires. Des bits de sortie S1 avec des bits de retenues C1 de l'additionneur 110 sont introduits à l'entrée d'un additionneur à propagation de retenues 111 (CPA ou Carry Propagate Adder en anglais). Les bits de sortie S2 de l'additionneur 111 sont placés à l'entrée d'un étage à bascules 112 (Flip-Flop) qui est cadencé par la seconde fréquence d'horloge CLK/N, qui peut valoir 272,5 kHz. A chaque coup d'horloge CLK/N opéré sur l'étage à bascules 112, de nouveaux signaux binaires S3 ou bits de sortie sont produits. Un nombre P'b de bits de sortie de l'étage à bascules est introduit à l'entrée de l'additionneur 110 comme discuté en référence à la figure 1b. Ce nombre de bits S3 de sortie est égal au nombre P'b de bits, donc à chaque coup d'horloge à la seconde fréquence CLK/N, de nouveaux signaux binaires ou bits de sortie P'b sont additionnés dans l'additionneur 110 aux Pb et Pbø bits de poids faible.

Un certain nombre Qb de bits de sortie de l'étage à bascules 112, qui sont en principe les bits de poids les plus forts, sont placés à l'entrée d'un multiplicateur ou multiplexeur 13. Un signal de commande MX-NCO permet de reporter le cumul d'addition des Qb bits de sortie vers le premier étage d'accumulation. Ce signal de commande a une fréquence équivalente à la seconde fréquence d'horloge CLK/N. Une multiplication ou plus précisément un décalage de N positions vers des bits de poids fort est opéré sur les Qb bits de sortie afin de fournir un nombre Q'b de bits multiplié à l'entrée du premier étage d'accumulation.

Le premier étage d'accumulation 12 comprend tout d'abord un premier additionneur à sauvegarde de retenues 120 (CSA ou Carry Save Adder en anglais) qui reçoit en entrée les Ob et Obø bits de poids fort des premier et second mots binaires, ainsi que les Q'b bits du second étage d'accumulation 11. Des bits de sortie S4 avec des bits de retenues C4 de l'additionneur 120 sont introduits à l'entrée d'un second additionneur à sauvegarde de retenues 121. Les bits de sortie S5 et de retenues C5 de l'additionneur 121 sont placés à l'entrée d'un additionneur du type Brent & Kuhn (BKA) 122, qui correspond à un additionneur à propagation de retenues (CPA ou Carry Propagate Adder en anglais). Les bits de sortie S6 de l'additionneur 122 est placé à l'entrée d'un étage à bascules 123 (Flip-Flop) qui est cadencé par la première fréquence d'horloge CLK, qui peut valoir 4,36 MHz. A chaque coup d'horloge CLK opéré sur l'étage à bascules 123, de nouveaux signaux binaires S7 ou bits de sortie sont produits. Un nombre O'b de bits de sortie de l'étage à bascules 123 est introduit à l'entrée de l'additionneur 121 comme discuté en référence à la figure 1b. Ce nombre de bits S7 de sortie est égal au nombre O'b de bits, donc à chaque coup d'horloge à la première fréquence CLK, de nouveaux signaux binaires ou bits de sortie O'b sont additionnés dans l'additionneur 121 aux bits de sortie S4 et de retenues C4. Un ou deux signaux de sortie Mb à fréquence déterminée sont tirés des bits de sortie S7. Ces signaux Mb sont choisis parmi les bits les plus forts des bits de sortie S7.

Concernant la réalisation des additionneurs CSA ou CPA, le lecteur peut se référer pour plus de détails par exemple au brevet US 4,110,832 qui décrit un additionneur à sauvegarde de retenues, ou aux articles intitulés « Fast carry save adder » de novembre 1990 aux pages 157 à 159 (réf. 90A 63170) et « Adder Architecture » de mars 1981 aux pages 4587 à 4590 (réf. 81A 02029) d'IBM Technical Disclosure Bulletin. Quant à l'additionneur Brent & Kuhn, on peut se référer à l'article intitulé « A Regular Layout for Parallel Adders » de R.P. Brent and H.T. Kuhn, tiré de IEEE Trans. on Computers, vol. 31, pages 260 à 264 de mars 1982.

Dans le cas d'un oscillateur multiphase du code, le signal de sortie Mb correspond au signal d'horloge PRN-CLK corrigé pour le générateur du code pseudo-aléatoire. Par contre, dans le cas d'un oscillateur multiphase de la porteuse, deux signaux de sortie Mb sont produits pour être introduits dans des portes logiques pour la génération des signaux en quadrature de la réplique de la fréquence porteuse.

Le récepteur GPS basse puissance peut être monté par exemple dans une montre-bracelet. Cette montre possède un accumulateur ou une pile de petite taille, ce qui fait que la puissance consommée doit être la plus faible possible lors du fonctionnement du récepteur GPS. C'est pour ces raisons qu'il a été prévu de munir le récepteur GPS d'oscillateurs à commande numérique multiphase, car l'essentiel de la consommation en énergie est due auxdits oscillateurs et aux intégrateurs dans l'étage de corrélation.

La figure 3 représente un récepteur GPS basse puissance 1. Il se compose tout d'abord d'une antenne 2 pour recevoir des signaux radiofréquences provenant de plusieurs satellites et d'un étage de réception et de mise en forme des signaux radiofréquences 3 fournis par l'antenne 2. Le récepteur comprend encore un étage de corrélation 4 recevant des signaux intermédiaires IF sous forme complexe en sortie de l'étage de réception 3, et un microprocesseur non représenté pour le traitement du message GPS. Ledit étage de corrélation est constitué de plusieurs canaux, par exemple au nombre de 12, mais un seul canal est montré sur cette figure 3.

Dans l'étage de réception 3, les signaux intermédiaires complexes IF sont fournis à une fréquence de 400 kHz par un échantillonnage à 4,36 MHz à l'étage de corrélation. Ce signal intermédiaire complexe IF est donc composé d'un signal en phase I et d'un signal en quadrature Q.

Comme les signaux traités dans l'étage de mise en forme donne dans la moitié des cas des signaux de parité différente (+1 et -1), il doit donc être tenu compte de cette parité pour les opérations de démodulation des signaux GPS dans le récepteur.

Dans le cas d'un récepteur GPS basse puissance, il est recommandé de sortir des signaux intermédiaires IF à 1-bit de quantification pour la fréquence de la porteuse, même si cette quantification génère une perte additionnelle de l'ordre de 3 dB sur le rapport du signal sur bruit (SNR).

Un générateur de signaux d'horloge dans l'étage de mise en forme 3 comprend par exemple un oscillateur à quartz, pour la fourniture de signaux d'horloge. Dans l'application du récepteur GPS basse puissance, l'oscillateur à quartz est suivi de diviseurs de fréquence pour pouvoir réaliser un premier signal d'horloge CLK de 4,36 MHz, et un second signal d'horloge de fréquence N fois inférieure au premier signal d'horloge. Cette seconde fréquence d'horloge CLK16 est par exemple fixée à 272,5 kHz ce qui correspond à une valeur de N égale à 16.

Ces deux signaux d'horloge permettent de cadencer plusieurs parties de l'étage de corrélation notamment les deux oscillateurs à commande numérique décrits ci-dessus.

Il est à noter que la fréquence de 4,36 MHz pourrait être beaucoup plus petite, car deux critères définissent cette valeur. Le premier critère est relatif à l'algorithme d'échantillonnage complexe où la largeur de bande du filtre anti-recouvrement limite la fréquence d'horloge à un minimum de 3 MHz. Le deuxième critère est la fréquence d'horloge qui doit être asynchrone avec celles du code PRN (1,023 MHz) et de la porteuse (400 kHz). En fonction de certains critères de l'étage de mise en forme RF/IF, ladite première fréquence d'horloge a été fixée à 4,36 MHz.

Les données des messages démodulés sont des signaux à une fréquence de 50 Hz qui sont fournis au microprocesseur qui suit l'étage de corrélation.

Comme décrit précédemment plusieurs signaux radiofréquences provenant de plusieurs satellites sont reçus à l'antenne. Puisque leurs C/A codes sont orthogonaux, les canaux du récepteur peuvent travailler de manière simultanée pour se verrouiller chacun sur un satellite respectif.

Les signaux intermédiaires IF fournis à l'étage de corrélation comprennent du bruit qui est généralement environ de 16 dB supérieur aux signaux utiles, c'est pourquoi il est nécessaire de connaître la forme des signaux que le récepteur doit démoduler. Ceci sert à assurer une corrélation des signaux IF et une démodulation du message GPS pour le microprocesseur une fois que les canaux se sont verrouillés chacun sur un satellite visible respectif.

Dans une première phase de recherche d'un satellite, les paramètres de fréquence sont établis et le code PRN est chargé afin que le canal puisse débuter la recherche. Il examine toutes les phases possibles dans une unique fréquence porteuse avec une résolution d'un chip. Lorsque le satellite a été trouvé, le circuit verrouille sur le signal pendant que les fréquences de porteuse et du code générées en interne sont adaptées. Aussi longtemps que la puissance du signal est suffisante, le canal continue la synchronisation des bits et extrait les messages GPS.

Pour déterminer la pseudo-distance, l'état du générateur de code PRN est transféré pour chaque canal simultanément, aussi bien que la phase courante du code de l'oscillateur mutliphase NCO. Cela permet de retrouver l'information sur la distance qui sépare le récepteur du satellite avec une résolution inférieure à une microseconde. Toutefois, il est nécessaire de se verrouiller sur au moins quatre satellites pour que le microprocesseur puissent tirer toutes les informations sur la position, la vitesse et le temps.

L'étage de corrélation d'un canal du récepteur sera expliqué ci-dessous de manière détaillée en référence à la figure 3. Cet étage de corrélation est montré avec une partie pour la boucle d'asservissement du code PRN et une autre partie pour la boucle d'asservissement de la fréquence de la porteuse. Pour plus de détails relatifs aux divers éléments de cet étage de corrélation, le lecteur peut se reporter à l'enseignement tiré du livre « Understanding GPS Principles and Applications » au chapitre 5 rédigé par Phillip Ward et de l'éditeur Elliott D. Kaplan (Artech House Publishers, USA 1996) au numéro d'édition ISBN 0-89006-793-7. Le lecteur peut également se référer au chapitre 8 intitulé « GPS receivers » rédigé par A.J. Van Dierendonck du livre « Global Positioning System and Applications » publié par American Institute of Aeronautics and Astronautics en 1996.

Dans l'étage de corrélation, la composante ponctuelle a été éliminée de la boucle d'asservissement du code par mesure d'économie de consommation, mais une perte du rapport signal sur bruit est constatée qui est de l'ordre de 2,5 dB.

Le signal intermédiaire IF, représenté sur la figure 3 par une ligne en gras coupée d'une barre oblique définissant 2 bits, est un signal complexe (I + iQ) composé d'un signal en phase I à 1 bit et d'un signal en quadrature Q à 1 bit. Ledit signal intermédiaire IF a été échantillonné et quantifié, et est passé d'abord par un étage multiplicateur 20 de la porteuse. Un multiplicateur 21 multiplie le signal IF par le Cosinus moins i fois le Sinus de la réplique de la porteuse générée en interne afin de tirer du signal complexe le signal en phase I. Un multiplicateur 22 multiplie le signal IF par le moins Sinus moins i fois le Cosinus de la réplique de la porteuse générée en interne afin de tirer du signal complexe le signal en quadrature Q.

Il s'agit après cette opération de trouver l'équivalence du code PRN du signal d'un satellite à acquérir dans un canal enclenché avec un code PRN généré dans ledit canal correspondant au satellite souhaité. Pour cela les signaux en phase et en quadrature passe par un second étage de multiplicateurs 23 pour corréler les signaux I et Q avec une réplique en avance et une réplique en retard du code PRN pour obtenir quatre signaux de corrélation. Dans chaque canal de l'étage de corrélation, il n'a été gardé que la réplique en avance et en retard au lieu des trois répliques normalement sans tenir compte de la réplique ponctuelle. Cela permet de minimiser le nombre d'éléments de corrélation.

Le multiplicateur 24 reçoit le signal I et le signal de réplique en avance E (du terme anglais « early ») d'un registre à 2 bits 36 et fournit un signal corrélé en phase en avance. Le multiplicateur 25 reçoit le signal I et le signal de réplique en retard L (du terme anglais « late ») du registre 36 et fournit un signal corrélé en phase en retard. Le multiplicateur 26 reçoit le signal en quadrature Q et le signal en avance E, et fournit un signal corrélé en quadrature en avance. Enfin, le multiplicateur 27 reçoit le signal Q et le signal de réplique en retard L, et fournit un signal corrélé en quadrature en retard. L'écart entre la réplique en avance E et la réplique en retard L est d'un demi chip dans la réalisation de la présente invention, ce qui fait que l'écart avec une composante centrale ponctuelle P est de ¼ chip. Les multiplicateurs peuvent être réalisés par simplification à l'aide de portes logiques EX-NOR par exemple.

Concernant les signaux en avance et en retard d'un demi chip d'écart, ils sont utilisés afin de capturer la pointe d'énergie détectée lors de l'acquisition du satellite, ce qui rend l'utilisation des signaux ponctuels superflue, avec comme but d'éviter toute consommation inutile dans le récepteur GPS basse puissance. Néanmoins, l'emploi de ces composantes en avance et en retard suffit à l'acquisition du satellite.

Les quatre signaux corrélés entrent chacun dans un des intégrateurs compteurs 28, 29, 30, 31, qui sont des éléments de pré-détection, dont les valeurs de sorties $I_{ES}$, $I_{LS}$, $Q_{ES}$ et $Q_{LS}$ sont représentées à 10 bits ce qui signifie qu'il a fallu un cycle complet du C/A code PRN pour trouver lesdites valeurs. Un jeu complet de valeurs $I_{ES}$, $I_{LS}$, $Q_{ES}$ et $Q_{LS}$ est obtenu chaque milliseconde ou chaque époque (epoch en anglais). Toutes les opérations dans les boucles qui suivent ces intégrateurs se font dans une architecture à bits parallèles avec des signaux à une fréquence de 1 kHz. Pour éliminer une partie du bruit du signal utile à démoduler, uniquement les 8 bits de poids fort sont utilisés pour la suite de la chaîne de traitement des signaux numériques.

Les valeurs des signaux $I_{ES}$, $I_{LS}$, $Q_{ES}$ et $Q_{LS}$, représentées sur la figure par une ligne en gras coupée par une barre oblique définissant 8 bits, sont passés dans un discriminateur de boucle de code 32 et dans un filtre de boucle de code 33. Le discriminateur de boucle de code réalise les opérations de calcul de l'énergie des signaux $I_{ES}$, $I_{LS}$, $Q_{ES}$ et $Q_{LS}$. Le discriminateur est non-cohérent du type à blocage de boucle de retard (DLL) qui est bien connu de l'homme du métier. Il est constitué notamment par un multiplicateur 8-bit et par un accumulateur 20-bit. Sur ce discriminateur, une correction est amenée de la boucle de la porteuse, car lors de l'émission du signal par le satellite l'effet Doppler se fait sentir non seulement sur la fréquence porteuse, mais également sur le code PRN qui est modulé sur la fréquence porteuse. L'apport de la porteuse dans le discriminateur de boucle de code correspond à une division par 1540 de l'incrément d'écart de la porteuse.

Suivant le résultat filtré du discriminateur, un incrément de phase est imposé au NCO 28-bit. L'oscillateur multiphase NCO corrige la fréquence du signal d'horloge PRN-CLK pour cadencer le générateur de code PRN 35 afin qu'il transmette la série de bits du C/A code PRN au registre 36 pour faire une nouvelle corrélation. La résolution de fréquence de ce NCO 28-bit est de l'ordre de 16 mHz. Dans le NCO du code, il est entré en plus du premier mot binaire de l'incrément de phase également le second mot binaire qui correspond à la valeur idéale de fréquence pour le code PRN, c'est-à-dire une fréquence de 1,023 MHz.

Après la synchronisation et le verrouillage sur le satellite souhaité, les valeurs $I_{ES}$ et $I_{LS}$ sont introduites dans un élément de démodulation 50 capable de fournir le message de données à 50 Hz sur 1 bit au microprocesseur. En plus du message, le microprocesseur peut prendre notamment les informations concernant les pseudo-distances insérées dans le registre tampon afin de calculer la position X,Y et Z, la vitesse et le temps universel précis.

Tous les éléments expliqués ci-dessus ne seront pas décrits de manière plus détaillée, étant donné qu'ils font partie des connaissances générales d'un homme du métier dans ce domaine technique.

En référence à la figure 3, le signal IF est multiplié par le Cosinus moins i fois le Sinus de la réplique de la porteuse générée en interne dans le multiplicateur 21 et par le moins Sinus moins i fois le Cosinus de la réplique de la porteuse générée en interne dans le multiplicateur 22. Ces signaux Sin et Cos proviennent d'un bloc 45 d'une table COS/SIN du signal de la réplique. Le but est de retirer en définitive la fréquence porteuse des signaux portant le message GPS.

La somme des signaux $I_{ES}$ et $I_{LS}$ dans l'additionneur 37 est utilisé pour créer le signal $I_{PS}$ et la somme des signaux $Q_{ES}$ et $Q_{LS}$ dans l'additionneur 38 est utilisée pour créer le signal $Q_{PS}$, tous deux représentés sur 8 bits. Ces valeurs sont introduites à une fréquence de 1 kHz dans un discriminateur de boucle de porteuse 42 (détection d'enveloppe) pour calculer l'énergie des signaux suivi d'un filtre de boucle de porteuse 43. Le discriminateur est composé notamment d'un multiplicateur 8-bit et d'un accumulateur 20-bit. Il est du type à blocage de boucle de fréquence et de phase.

Une opération de moyenne sur le discriminateur de fréquence est réalisée afin d'accroître la robustesse et la précision des boucles de poursuite de la porteuse. Comme défini précédemment, l'accumulation prévue dans le discriminateur dure 16 cycles, ce qui correspond à 16 ms.

Suivant le résultat du discriminateur et après passage à travers le filtre, le NCO 24-bit de la porteuse 44 reçoit un incrément de fréquence (bin) pour la correction de la réplique de la fréquence porteuse. Ce NCO 24-bit a une résolution de fréquences de l'ordre de 260 mHz. Dans le NCO de la porteuse, il est entré en plus du premier mot binaire de l'incrément de fréquence également le second mot binaire qui correspond à la valeur de fréquence de la porteuse en tenant compte de l'effet Doppler.

Les deux procédés d'asservissement du code et de la porteuse sont synchronisés durant la poursuite, ceci bien que les boucles de poursuite de la porteuse sont seulement mises à jour après une confirmation de présence du signal du satellite.

Les algorithmes d'acquisition et de poursuite requiert la réplique de la fréquence porteuse du satellite pour la démodulation. Le retrait de l'effet Doppler qui peut causer des erreurs en fréquence entre $\pm$ 4,5 kHz inhérent à toute émission de signaux radiofréquences des satellites en mouvement peut être éliminé en adaptant soit la phase soit la fréquence du signal entrant dans le récepteur.

D'autres erreurs dues à l'imprécision de l'oscillateur interne ou aux effets de la ionosphère s'ajoutent aux erreurs dues uniquement à l'effet Doppler. En règle générale, on peut compter jusqu'à un écart de fréquence d'environ $\pm$ 7,5 kHz. Ces erreurs peuvent bien entendu être corrigées dans la boucle de code et dans la boucle de la porteuse lors de la phase d'acquisition et de poursuite.

A chaque époque de corrélation, la phase du code PRN peut être retardée par pas de 1 chip. Ceci permet de décaler dans le temps le code afin de trouver l'écart de phase du satellite. Une fois que le satellite a été trouvé, il s'agit de corriger la fréquence porteuse comprenant les effets Doppler ce qui se fait dans une boucle d'asservissement de la porteuse. Comme la différence entre la fréquence de la porteuse reçue et la fréquence de la porteuse générée est limitée à plus ou moins 250 Hz, plusieurs recherches à différentes fréquences de la porteuse générée peuvent être nécessaires. Dans le pire des cas, jusqu'à 20 recherches pour la correction de la fréquence dans le NCO de la porteuse sont nécessaires.

Il est encore à noter que l'oscillateur à commande numérique multiphase défini par NCO doit être suffisamment large pour avoir une petite résolution de fréquences, ce qui a pour conséquence une consommation importante. En réalisant un oscillateur du type multiphase, la consommation est réduite d'au moins un facteur 2 ou plus selon la répartition des bits dans les deux étages de l'oscillateur.

De plus dans chaque boucle de démodulation, il doit être tenu compte d'un bruit thermique et d'un bruit de quantification de l'oscillateur qu'il faut minimiser. Dans le cas d'un oscillateur multiphase, le bruit de quantification est un peu plus important que pour un oscillateur standard, mais ce bruit de quantification reste bien inférieur au bruit thermique. De ce fait, les opérations dans chaque boucle de démodulation peuvent être réalisées sans problème majeur.

Bien entendu d'autres formes de réalisation de l'oscillateur à commande numérique multiphase notamment pour un récepteur GPS basse puissance auraient pu être décrites à la connaissance de l'homme du métier sans sortir du cadre de l'invention définie par les revendications. Les signaux de sortie de l'oscillateur multiphase pourrait être également des signaux du type analogique plutôt que les signaux de forme rectangulaire décrits. De même, le mot binaire introduit à l'entrée de l'oscillateur aurait pu être fourni sous forme sérielle, mais dans ce cas plusieurs complications à l'entrée de l'oscillateur seraient survenues.

**Revendications**

1. Oscillateur à commande numérique (8) pour un récepteur de signaux radiofréquences, l'oscillateur recevant à l'entrée un signal d'horloge à une première fréquence (CLK) qui cadence les opérations de l'oscillateur, ainsi qu'un mot binaire de phase à plusieurs bits (Nb) pour fournir au moins un signal de sortie à fréquence déterminée sur la base dudit mot binaire et dudit signal d'horloge, l'oscillateur comprenant :

- un premier étage d'accumulation (10, 12), comprenant un premier registre (10) pour recevoir, dans une architecture à bits parallèles, un premier nombre de bits de poids fort (Ob) du mot binaire et au moins un premier accumulateur (12), dont des lignes de sortie définissant un premier nombre de bits (O'b) ou signaux binaires de sortie en parallèle sont reliées à des entrées du premier accumulateur, et
- un second étage d'accumulation (9, 11) comprenant un second registre (9) pour recevoir, dans une architecture à bits parallèles, un second nombre de bits de poids faible (Pb) dudit mot binaire et au moins un second accumulateur (11), dont des lignes de sortie définissant un second nombre de bits (P'b) ou signaux binaires de sortie en parallèle sont reliées à des entrées du second accumulateur, le nombre total de bits de poids fort et de poids faible étant égal ou inférieur au nombre de bits du mot binaire de phase,

**caractérisé en ce que** le premier accumulateur (12) est cadencé à la première fréquence d'horloge (CLK) pour fournir le signal de sortie à fréquence déterminée, alors que le second accumulateur (11) est cadencé à une seconde fréquence d'horloge (CLK/N) N fois inférieure à la première fréquence d'horloge, où N est un multiple de 2,
**en ce que** les lignes de sortie définissant le second nombre de bits (P'b) ou signaux binaires de sortie en parallèle du second accumulateur (11) sont reliées auxdites entrées du second accumulateur pour opérer une addition avec le second nombre de bits de poids faible (Pb) du mot binaire fourni par le second registre (9) à chaque cycle à la seconde fréquence d'horloge (CLK/N), et
**en ce qu'**un certain nombre de bits (Qb) ou signaux binaires de sortie du second accumulateur est multiplié par N dans un multiplicateur ou multiplexeur (13) pour produire un nombre (Q'b) de bits multiplié, qui est introduit à l'entrée du premier accumulateur (12) tous les N cycles du signal d'horloge à la première fréquence, pour opérer une addition avec le premier nombre de bits de poids fort (Ob) fourni par le premier registre (10) et avec le premier nombre de bits (O'b) ou signaux binaires de sortie du premier accumulateur.

2. Oscillateur selon la revendication 1, **caractérisé en ce que** le premier étage d'accumulation (12) comprend à l'entrée un troisième registre pour recevoir dans une architecture à bits parallèles un troisième nombre de bits de poids fort (Obø) d'un second mot binaire (Nbø) à nombre de bits équivalent au premier mot binaire (Nb), **en ce que** le second étage d'accumulation (11) comprend à l'entrée un quatrième registre pour recevoir un quatrième nombre de bits de poids faible (Pbø) du second mot binaire (Nbø), le nombre total de bits de poids fort et de poids faible étant égal ou inférieur au nombre de bits du second mot binaire.

3. Oscillateur selon la revendication 1, ledit oscillateur faisant partie d'une boucle de génération de la réplique d'un code pseudo-aléatoire d'un récepteur de signaux radiofréquences, ledit code étant représentatif d'un satellite émetteur, **caractérisé en ce qu'**un premier registre d'entrée (10) du premier étage d'accumulation mémorise le premier nombre de bits de poids fort (Ob) du mot binaire qui définit un écart de phase du code, **en ce qu'**un second registre d'entrée (9) du second étage d'accumulation mémorise le second nombre de bits de poids faible (Pb) dudit mot binaire, et **en ce que** le premier étage d'accumulation fournit en sortie un signal d'horloge de code (PRN-CLK) pour un générateur de code pseudo-aléatoire (35) sur la base dudit mot binaire (Nb) et de la première fréquence d'horloge (CLK).

4. Oscillateur selon la revendication 3, **caractérisé en ce qu'**un troisième registre d'entrée du premier étage d'accumulation mémorise un troisième nombre de bits de poids fort (Obø) d'un second mot binaire (Nbø) à nombre de bits équivalent au premier mot binaire (Nb), ledit second mot binaire définissant une phase connue du code tirée d'une mémoire du récepteur, et **en ce qu'**un quatrième registre d'entrée du second étage d'accumulation mémorise un quatrième nombre de bits de poids faible (Pbø) du second mot binaire, le nombre total de bits de poids fort et de poids faible étant égal ou inférieur au nombre de bits du second mot binaire.

5. Oscillateur selon la revendication 1, ledit oscillateur faisant partie d'une boucle de génération de la réplique d'une fréquence porteuse d'un récepteur de signaux radiofréquences, **caractérisé en ce qu'**un premier registre d'entrée (10) du premier étage d'accumulation mémorise le premier nombre de bits de poids fort (Ob) du mot binaire (Nb) qui définit un écart de phase de la fréquence porteuse, **en ce qu'**un second registre d'entrée (9) du second étage d'accumulation mémorise le second nombre de bits de poids faible (Pb) dudit mot binaire, et **en ce que** le premier étage d'accumulation fournit en sortie sur au moins deux lignes de sortie des signaux binaires de fréquence porteuse pour une table de génération (45) de la réplique de la fréquence porteuse sur la base dudit mot binaire (Nb) et de la première fréquence d'horloge (CLK).

6. Oscillateur selon la revendication 5, **caractérisé en ce qu'**un troisième registre d'entrée du premier étage d'accumulation mémorise un troisième nombre de bits de poids fort (Obø) d'un second mot binaire (Nbø) à nombre de bits équivalent au premier mot binaire (Nb), ledit second mot binaire définissant une phase connue de fréquence porteuse tirée d'une mémoire du récepteur, et **en ce qu'**un quatrième registre d'entrée du second étage d'accumulation mémorise un quatrième nombre de bits de poids faible (Pbø) du second mot binaire, le nombre total de bits de poids fort et de poids faible étant égal ou inférieur au nombre de bits du second mot binaire.

7. Oscillateur selon la revendication 2, **caractérisé en ce que** le premier étage d'accumulation (12) comprend un premier additionneur à sauvegarde de retenues (120) recevant à l'entrée les premier et troisième nombres de bits de poids fort (Ob, Obø) des premier et second mots binaires (Nb, Nbø), un second additionneur à sauvegarde de retenues (121) dont des entrées sont connectées aux sorties du premier additionneur à sauvegarde de retenues (120), un premier additionneur à propagation de retenue (122) dont les entrées sont reliées aux sorties du second additionneur à sauvegarde de retenues (121), et un premier bloc à bascules (123) dont les entrées sont connectées aux sorties du premier additionneur à propagation de retenues (122), le premier bloc générant des bits ou signaux binaires de sortie (S7) du premier étage à chaque cycle de la première fréquence d'horloge (CLK), plusieurs lignes de sortie (O'b) du premier bloc à bascules étant reliées à des entrées du second additionneur à sauvegarde de retenues (121), alors qu'au moins une ligne de sortie du premier bloc fournit le signal de sortie (Mb) de l'oscillateur, et **en ce que** le second étage d'accumulation (11) comprend un troisième additionneur à sauvegarde de retenues (110) recevant à l'entrée les deuxième et quatrième nombres de bits de poids faible (Pb, Pbø) des premier et second mots binaires (Nb, Nbø), un second additionneur à propagation de retenues (111) dont les entrées sont connectées aux sorties du troisième additionneur à sauvegarde de retenues (110), un second bloc à bascules (112) dont les entrées sont connectées aux sorties du second additionneur à propagation de retenues (111), le second bloc générant des bits (S3) ou signaux binaires de sortie du second étage à chaque cycle de la seconde fréquence d'horloge (CLK/N), plusieurs lignes de sortie (P'b) du second bloc étant reliées à des entrées du troisième additionneur à sauvegarde de retenues (110), alors qu'un certain nombre de bits (Qb) ou signaux binaires de sortie du second étage sont multipliés par N dans un multiplicateur ou multiplexeur (13) pour être introduits à des entrées du premier additionneur à sauvegarde de retenues (120) tous les N cycles de la première fréquence d'horloge (CLK).

## Claims

1. Numerically controlled oscillator (8) for a radiofrequency signal receiver, the oscillator receiving at one input a clock signal with a first frequency (CLK) which clocks the oscillator operations, and a phase binary word of several bits (Nb) to provide at least one output signal with a frequency determined as a function of said binary word and said clock signal, the oscillator including:

- a first accumulation stage (10, 12) including a first register (10) for receiving, in a bit-parallel architecture, a first number of most-significant bits (Ob) of the binary word and at least a first accumulator (12) the output lines of which defining a first number of parallel output bits (O'b) or binary signals are connected to inputs of the first accumulator, and
- a second accumulation stage (9, 11) including a second register (9) for receiving, in a bit-parallel architecture, a second number of least-significant bits (Pb) of said binary word and at least a second accumulator (11) the output lines of which defining a second number of parallel output bits (P'b) or binary signals are connected to inputs of the second accumulator, the total number of most-significant and least-significant bits being equal to or less than the number of bits of the phase binary word,

**characterised in that** the first accumulator (12) is clocked at the first clock frequency (CLK) to supply the determined frequency output signal, while the second accumulator (11) is clocked at a second clock frequency (CLK/N) N times lower than the first clock frequency, where N is a multiple of 2, **in that** the output lines defining the second number of output bits (P'b) or binary signals in parallel of the second accumulator (11) are connected to said inputs of the second accumulator to perform an addition with the second number of least-significant bits (Pb) of the binary word supplied by the second register (9) at each cycle of the second clock frequency (CLK/N), and **in that** a certain number of output bits (Qb) or binary signals from the second accumulator is multiplied by N in a multiplier or multiplexer (13) to provide a multiplied bit number (Q'b), which is introduced at the input of the first accumulator (12) every N cycles of the clock signal at the first frequency, to perform an addition with the first number of most-significant bits (Ob) supplied by the first register (10), and the first number of output bits (O'b) or binary signals from the first accumulator.

2. Oscillator according to claim 1, **characterised in that** the first accumulation stage (12) includes at the input a third register for receiving in a bit-parallel architecture a third number of most-significant bits (Obø) of a second binary word (Nbø), with an equivalent number of bits to the first binary word (Nb), and **in that** the second accumulation stage (11) includes at the input a fourth register for receiving a fourth number of least-significant bits (Pbø) of the second binary word (Nbø), the total number of most-significant and least-significant bits being equal to or less than the second binary word bit number.

3. Oscillator according to claim 1, said oscillator forming part of a pseudo-random code replica generating loop of a radiofrequency signal receiver, said code being representative of a transmitting satellite, **characterised in that** a first input register (10) of the first accumulation stage stores the first most-significant bit number (Ob) of the binary word which defines a code phase offset, **in that** a second input register (9) of the second accumulation stage stores the second number of least-significant bits (Pb) of said binary word, and **in that** the first accumulation stage provides at one output a code clock signal (PRN-CLK) for a pseudo-random code generator (35) as a function of said binary word (Nb) and the first clock frequency (CLK).

4. Oscillator according to claim 3, **characterised in that** a third input register of the first accumulation stage stores a third number of most-significant bits (Obø) of a second binary word (Nbø) having an equivalent bit number to the first binary word (Nb), said second binary word defining a known code phase extracted from a receiver memory, and **in that** a fourth input register of the second accumulation stage stores a fourth number of least-significant bits (Pbø) of the second binary word, the total number of most-significant and least-significant bits being equal to or less than the number of bits of the second binary word.

5. Oscillator according to claim 1, said oscillator forming part of a frequency carrier replica generating loop of a radiofrequency signal receiver, **characterised in that** a first input register (10) of the first accumulation stage stores the first most-significant bit number (Ob) of the binary word (Nb) which defines a frequency carrier phase offset, **in that** a second input register (9) of the second accumulation stage stores the second number of least-significant bits (Pb) of said binary word, and **in that** the first accumulation stage provides at one output over at least two output lines carrier frequency binary signals for a carrier frequency replica generating table (45) as a function of said binary word (Nb) and the first clock frequency (CLK).

6. Oscillator according to claim 5, **characterised in that** a third input register of the first accumulation stage stores a third number of most-significant bits (Obø) of a second binary word (Nbø) having an equivalent bit number to the first binary word (Nb), said second binary word defining a known carrier frequency phase extracted from a receiver memory, and **in that** a fourth input register of the second accumulation stage stores a fourth number of least-significant bits (Pbø) of the second binary word, the total number of most-significant and least-significant bits being equal to or less than the number of bits of the second binary word.

7. Oscillator according to claim 2, **characterised in that** the first accumulation stage (12) includes a first carry save adder (120) receiving at its inputs the first and third most-significant bit numbers (Ob, Obø) of the first and second binary words (Nb, Nbø), a second carry save adder (121) the inputs of which are connected to the outputs of the first carry save adder (120), a first carry propagate adder (122) the inputs of which are connected to the outputs of the second carry save adder (121), and a first flip-flop unit (123) the inputs of which are connected to the outputs of the first carry propagate adder (122), the first unit generating output bits or binary signals (S7) of the first stage at each cycle of the first clock frequency (CLK), several output lines (O'b) of the first flip-flop unit being connected to inputs of the second carry save adder (121), while at least one output line of the first unit supplies the oscillator output signal (Mb), and **in that** the second accumulation stage (11) includes a third carry save adder (110) receiving at inputs the second and fourth least-significant bit numbers (Pb, Pbø) of the first and second binary words (Nb, Nbø), a second carry propagate adder (111) the inputs of which are connected to the outputs of the third carry save adder (110), a second flip-flop unit (112) the inputs of which are connected to the outputs of the second carry propagate adder (111), the second unit generating output bits (S3) or binary signals of the second stage at each cycle of the second clock frequency (CLK/N), several output lines (P'b) of the second unit being connected to inputs of the third carry save adder (110), while a certain number of output bits (Qb) or binary signals of the second stage are multiplied by N in a multiplier or multiplexer (13) to be introduced at the inputs of the first carry save adder (120) every N cycles of the first clock frequency (CLK).

**Patentansprüche**

1. Oszillator (8) mit digitaler Steuerung für einen Hochfrequenzsignalempfänger, wobei der Oszillator am Eingang ein Taktsignal mit einer ersten Frequenz (CLK), das die Operationen des Oszillators taktet, sowie ein Phasen-Binärwort mit mehreren Bits (Nb) empfängt, um auf der Grundlage des Binärworts und des Taktsignals wenigstens ein Ausgangssignal mit bestimmter Frequenz zu liefern, wobei der Oszillator umfasst:

   - eine erste Akkumulationsstufe (10, 12) mit einem ersten Register (10), um in einer Parallelbit-Architektur eine erste Anzahl von Bits (Ob) mit hohem Stellenwert des Binärworts zu empfangen, und wenigstens einem ersten Akkumulator (12), dessen Ausgangsleitungen, die eine erste Anzahl (O'b) paralleler Ausgangsbits oder -binärsignale definieren, mit Eingängen des ersten Akkumulators verbunden sind, und
   - eine zweite Akkumulationsstufe (9, 11) mit einem zweiten Register (9), um in einer Parallelbit-Architektur eine zweite Anzahl von Bits (Pb) mit niedrigem Stellenwert des Binärworts zu empfangen, und wenigstens einem zweiten Akkumulator (11), dessen Ausgangsleitungen, die eine zweite Anzahl (P'b) paralleler Ausgangsbits oder -binärsignale definieren, mit Eingängen des zweiten Akkumulators verbunden sind, wobei die Gesamtzahl von Bits mit hohem Stellenwert und von Bits mit niedrigem Stellenwert gleich oder kleiner als die Anzahl von Bits des Phasen-Binärworts ist,

   **dadurch gekennzeichnet, dass** der erste Akkumulator (12) mit der ersten Taktfrequenz (CLK) getaktet wird, um das Ausgangssignal mit bestimmter Frequenz zu liefern, während der zweite Akkumulator (11) mit einer zweiten Taktfrequenz (CLK/N) getaktet wird, die N-mal kleiner als die erste Taktfrequenz ist, wobei N ein Vielfaches von 2 ist, dass die Ausgangsleitungen, die die zweite Anzahl (P'b) paralleler Ausgangsbits oder -binärsignale des zweiten Akkumulators (11) definieren, mit den Eingängen des zweiten Akkumulators verbunden sind, um eine Addition mit der zweiten Anzahl (Pb) Bits mit niedrigem Stellenwert des in jedem Taktzyklus mit der zweiten Taktfrequenz (CLK/N) vom zweiten Register (9) gelieferten Binärworts auszuführen, und dass eine bestimmte Anzahl (Qb) Ausgangsbits oder -binärsignale des zweiten Akkumulators in einem Multiplizierer oder Multiplexer (13) mit N multipliziert wird, um eine multiplizierte Anzahl (Q'b) Bits zu erzeugen, die alle N Zyklen des Taktsignals mit der ersten Frequenz in den Eingang des ersten Akkumulators (12) eingegeben wird, um eine Addition der ersten Anzahl (Ob) Bits mit hohem Stellenwert, die von dem ersten Register (10) geliefert wird, mit der ersten Anzahl (O'b) Ausgangsbits oder -binärsignale des ersten Akkumulators auszuführen.

2. Oszillator nach Anspruch 1, **dadurch gekennzeichnet, dass** die erste Akkumulationsstufe (12) am Eingang ein drittes Register umfasst, um in einer Parallelbit-Architektur eine dritte Anzahl (ObØ) Bits mit hohem Stellenwert eines zweiten Binärworts (NbØ) mit einer Anzahl Bits, die zu dem ersten Binärwort (Nb) äquivalent ist, zu empfangen, und dass die zweite Akkumulationsstufe (11) am Eingang ein viertes Register umfasst, um eine vierte Anzahl (PbØ) Bits mit niedrigem Stellenwert des zweiten Binärworts (NbØ) zu empfangen, wobei die Gesamtzahl Bits mit hohem Stellenwert und von Bits mit niedrigem Stellenwert gleich oder kleiner als die Anzahl Bits des zweiten Binärworts ist.

3. Oszillator nach Anspruch 1, wobei der Oszillator einen Teil einer Schleife zur Erzeugung der Kopie eines Pseudozufallscodes eines Hochfrequenzsignalempfängers bildet, wobei der Code für einen Satellitensender repräsentativ ist, **dadurch gekennzeichnet, dass** ein erstes Eingangsregister (10) der ersten Akkumulationsstufe die erste Anzahl (Ob) Bits mit hohem Stellenwert des Binärworts, die einen Phasenabstand des Codes definiert, speichert, dass ein zweites Eingangsregister (9) der zweiten Akkumulationsstufe die zweite Anzahl (Pb) Bits mit niedrigem Stellenwert des Binärworts speichert und dass die erste Akkumulationsstufe auf der Grundlage des Binärworts (Nb) und der ersten Taktfrequenz (CLK) am Ausgang ein Code-Taktsignal (PRNCLK) für einen Pseudozufallscode-Generator (35) liefert.

4. Oszillator nach Anspruch 3, **dadurch gekennzeichnet, dass** ein drittes Eingangsregister der ersten Akkumulationsstufe eine dritte Anzahl (ObØ) Bits mit hohem Stellenwert eines zweiten Binärworts (NbØ) mit einer Anzahl Bits, die zu dem ersten Binärwort (Nb) äquivalent ist, speichert, wobei das zweite Binärwort eine bekannte Phase des von einem Speicher des Empfängers abgegebenen Codes definiert, und dass ein viertes Eingangsregister der zweiten Akkumulationsstufe eine vierte Anzahl (PbØ) Bits mit niedrigem Stellenwert des zweiten Binärworts speichert, wobei die Gesamtzahl von Bits mit hohem Stellenwert und von Bits mit niedrigem Stellenwert gleich oder kleiner als die Anzahl Bits des zweiten Binärworts ist.

5. Oszillator nach Anspruch 1, wobei der Oszillator einen Teil einer Schleife für die Erzeugung einer Kopie einer Trägerfrequenz eines Hochfrequenzsignalempfängers bildet, **dadurch gekennzeichnet, dass** ein erstes Eingangsre-gister (10) der ersten Akkumulationsstufe die erste Anzahl (Ob) Bits mit hohem Stellenwert des Binärworts (Nb), das einen Phasenabstand der Trägerfrequenz definiert, speichert, dass ein zweites Eingangsregister (9) der zweiten Akkumu-lationsstufe die zweite Anzahl (Pb) Bits mit niedrigem Stellenwert dieses Binärworts speichert und dass die erste Akkumulationsstufe auf der Grundlage des Binärworts (Nb) und der ersten Taktfrequenz (CLK) am Ausgang auf wenigstens zwei Ausgangsleitungen Binärsignale mit einer Trägerfrequenz für eine Tabelle (45) für die Erzeugung der Kopie der Trägerfrequenz liefert.

6. Oszillator nach Anspruch 5, **dadurch gekennzeichnet, dass** ein drittes Eingangsregister der ersten Akkumulationsstufe eine dritte Anzahl (ObØ) Bits mit hohem Stellenwert eines zweiten Binärworts (NbØ) mit einer Anzahl von Bits, die zu dem ersten Binärwort (Nb) äquivalent ist, speichert, wobei das zweite Binärwort eine bekannte Phase der von einem Speicher des Empfängers abgegebenen Trägerfrequenz definiert, und dass ein viertes Eingangsregister der zweiten Akkumulationsstufe eine vierte Anzahl (PbØ) Bits mit niedrigem Stellenwert des zweiten Binärworts speichert, wobei die Gesamtzahl von Bits mit hohem Stellenwert und Bits mit niedrigem Stellenwert gleich oder kleiner als die Anzahl Bits des zweiten Binärworts ist.

7. Oszillator nach Anspruch 2, **dadurch gekennzeichnet, dass** die erste Akkumulationsstufe (12) einen ersten Addierer (120) mit Übertragspeicherung, der am Eingang die erste und die dritte Anzahl (Ob, ObØ) Bits mit hohem Stellenwert des ersten bzw. des zweiten Binärworts (Nb, NbØ) empfängt, einen zweiten Addierer (121) mit Übertragspeicherung, dessen Eingänge mit den Ausgängen des ersten Addierers (120) mit Übertragspeicherung verbunden sind, einen ersten Addierer mit Übertragweiterführung (122), dessen Eingänge mit den Ausgängen des zweiten Addierers (121) mit Übertragspeicherung verbunden sind und einen ersten Kippschaltungsblock (123), dessen Eingänge mit den Ausgängen des ersten Addierers (122) mit Übertragweiterführung verbunden sind, umfasst, wobei der erste Block in jedem Zyklus der ersten Taktfrequenz (CLK) Ausgangsbits oder -binärsignale (S7) der ersten Stufe erzeugt, wobei mehrere Ausgangsleitungen (O'b) des ersten Kippschaltungsblocks mit Eingängen des zweiten Addierers (121) mit Übertragspeicherung verbunden sind, während wenigstens eine Ausgangsleitung des ersten Blocks das Ausgangssignal (Mb) des Oszillators liefert, und dass die zweite Akkumulationsstufe (11) einen dritten Addierer (110) mit Übertragspeicherung, der am Eingang die zweite und die vierte Anzahl (Pb, PbØ) Bits mit niedrigem Stellenwert des ersten bzw. des zweiten Binärworts (Nb, NbØ) empfängt, einen zweiten Addierer (111) mit Übertragweiterführung, dessen Eingänge mit den Ausgängen des dritten Addierers (110) mit Übertragspeicherung verbunden sind, und einen zweiten Kippschaltungsblock (112), dessen Eingänge mit den Ausgängen des zweiten Addierers (111) mit Übertragweiterführung verbunden sind, umfasst, wobei der zweite Block in jedem Zyklus der zweiten Taktfrequenz (CLK/N) Ausgangsbits (S3) oder -binärsignale der zweiten Stufe erzeugt, wobei mehrere Ausgangsleitungen (P'b) des zweiten Blocks mit Eingängen des dritten Addierers (110) mit Übertragspeicherung verbunden sind, während eine bestimmte Anzahl Ausgangsbits (Qb) oder -binärsignale der zweiten Stufe in einem Multiplizierer oder Multiplexer (13) mit N multipliziert wird, um alle N Zyklen der ersten Taktfrequenz (CLK) in die Eingänge des ersten Addierers (120) mit Übertragspeicherung eingegeben zu werden.

Fig. 1a
(art antérieur)

Fig. 1b

Fig. 2

EP 1 215 557 B1

Fig. 3

## RÉFÉRENCES CITÉES DANS LA DESCRIPTION

**Documents brevets cités dans la description**

- JP 8338865 A
- EP 0414445 A
- US 5371765 A
- US 5646967 A
- US 4110832 A

**Littérature non-brevet citée dans la description**

- *« Fast carry save adder »,* Novembre 1990, 157-159
- *Adder Architecture,* Mars 1981, 4587-4590
- **R.P. Brent ; H.T. Kuhn.** A Regular Layout for Parallel Adders. *IEEE Trans. on Computers,* Mars 1982, vol. 31, 260-264
- **Phillip Ward.** Understanding GPS Principles and Applications. Artech House Publishers, 1996
- GPS receivers. **A.J. Van Dierendonck.** Global Positioning System and Applications. American Institute of Aeronautics and Astronautics, 1996, vol. 8